# EUROPEAN PATENT SPECIFICATION

(11) **EP 1 489 910 B1**
(45) Date of publication and mention of the grant of the patent: **11.04.2007**
(21) Application number: 02716994.5
(22) Date of filing: 25.03.2002
(51) Int. Cl.: A01N 65/00, A01N 43/16

(54) **A NEW ANTIVIRAL AGENT FROM INDIAN HORSE CHESTNUT AESCULUS INDICA**
EIN ANTIVIRALES MITTEL AUS DER INDISCHEN ROSSKASTANIE AESCULUS INDICA
NOUVEL AGENT ANTIVIRAL PROVENANT DU MARRONNIER D'INDE ( I AESCULUS INDICA /I )

(43) Date of publication of application: 29.12.2004
(73) Proprietor: COUNCIL OF SCIENTIFIC AND INDUSTRIAL RESEARCH, New Delhi 110 001 (IN)
(72) Inventor: SINGH, Bikram,Inst. of Himalayan Bioresource Tech., 176 061 Himachal Pradesh (IN); KATOCH, Meenu,Inst. of Himalayan Bioresource Tech., 176 061 Himachal Pradesh (IN); RAM, Raja,Inst. of Himalayan Bioresource Tech., 176 061 Himachal Pradesh (IN); ZAIDI,Aijaz A,Inst. of Himalayan Bioresource Tech., 176 061 Himachal Pradesh (IN)
(74) Representative: Jostarndt, Hans-Dieter
(86) International application number: PCT/IB2002/001129
(87) International publication number: WO 2003/079795

(56) References cited:
- DD-A- 268 615
- US-A- 3 110 711
- US-A- 4 784 853
- DATABASE WPI Section Ch, Week 199514 Derwent Publications Ltd., London, GB; Class C03, AN 1995-101754 XP002221798 & JP 07 025718 A (MITSUI NORIN KK), 27 January 1995 (1995-01-27)
- PATENT ABSTRACTS OF JAPAN vol. 1999, no. 12, 29 October 1999 (1999-10-29) & JP 11 193242 A (ITOUEN LTD), 21 July 1999 (1999-07-21)
- BUEECHI, SAMUEL: "Antiviral saponins. Pharmacological and clinical investigations" DEUTSCHE APOTHEKER ZEITUNG (1996), 136(2), 19-26, 28 , 1996, XP002221796
- SRIJAYANTA ET AL: "A COMPARATIVE STUDY OF THE CONSTITUENTS OF AESCULUS HIPPOCASTANUM AND AESCULUS INDICA" JOURNAL OF MEDICINAL FOOD, MARY ANN LIEBERT, LARCHMONT, NY,, US, vol. 2, no. 2, 1999, pages 45-50, XP008007007 ISSN: 1096-620X cited in the application
- PATENT ABSTRACTS OF JAPAN vol. 013, no. 233 (C-601), 29 May 1989 (1989-05-29) & JP 01 040494 A (NISSAN CHEM IND LTD), 10 February 1989 (1989-02-10)
- DATABASE CABA [Online] Commonwealth Agricultural Bureau Intenrational (CABI); DAWSON, W. O.: "Effects of animal antiviral chemicals on plant viruses" retrieved from STN, accession no. 84:79267 CABA Database accession no. 84:79267 XP002221797 & PHYTOPATHOLOGY, (1984) VOL. 74, NO. 2, PP. 211-213. 2 TAB. 12 REF. ISSN: 0031-949X, Dep. Plant Path., Univ. California, Riverside 92521, USA.

## Description

### TECHNICAL FIELD

The present invention relates to a composition containing aescin obtained from Indian horse chestnut (*Aesculus indica)* as an antiviral agent

More particularly this invention relates to β-aescin present in horse chestnut *(Aesculus indica* seeds) which is a natural source to inhibit cucumber mosaic virus. The antiviral activity of β-aescin against CMV is better than Amantadine, 2-Thiouracil, Zidovudine and Acyclovir, commercial antiviral products available in the market. Another usage of the present invention is meaningful utilization of Indian horse chestnut *(Aesculus indica* seeds) growing wild in temperate region for production of β-aescin, which has been identified as a potent antiviral agent.

### BACKGROUND ART

*Aesculus indica* Hook. (Hippocastanaceae) (Indian horse chestnut) is known as Bankhor in Hindi. A large, deciduous tree, with a short, straight, cylindrical bole and spreading crown, 30m in height and 7.5m in girth in favourable localities, distributed in the Himalayas from Kashmir to west Nepal, at altitudes of 900-3,600m. The tree is very handsome and generally found in rich, moist, shady ravines of Kashmir, Himachal Pradesh and Uttar Pradesh up to Nepal. It is often planted as ornamental tree on the hills. The tree sheds leaves from October to early December and the new leaves appear in April, and flowers during April-June when it is extremely attractive. The shoots and leaves are also used as fodder and fruits eaten by cattle. At times of scarcity, the hill tribes also eat them, by steeping the shoots and leaves in water to remove the bitter components. Sometimes the seeds are powdered and mixed with wheat flour. The crushed fruit is used for washing clothes. Analysis of the seeds gave: moisture, 3.5; reducing sugars (as dextrose), .83; sucrose, 9.07; starch, 38.3; water sol, 36.4; and crushed seeds, if fed to cattle, are reported to improve the quality and quantity of milk. Seeds are also given to horses for colic. The seeds contain oil, which is used in rheumatism and applied to wounds. The wood is creamy white or pale pinkish white when freshly cut, becomes pinkish brown on exposure, with light brown lines; the heartwood is not distinct. The timber is dull, with a smooth feel, and without any characteristic odour. It is light to moderately heavy (Sp. Gr. 0.43-0.57; wt, 479-560 kg/cum), soft, straight-or narrowly and shallowly interlocked - grained and sometimes waxy-grained. It is easy to saw, finishes to a smooth surface and takes good polish. The timber seasons well without much degrade.

The timber is largely used for building, packing cases, water-troughs, planking, cooperage, platters, tea-boxes, boat-fittings, cabinet-making and turnery articles; it is also suitable for mathematical instruments, shoe-heels and match-splints. The wood is also used for bobbins. The hardwood, after suitable dyeing and waxing, has been found to be suitable for high quality pencils. Selected portions are useful for high paneling in railway carriages, and for sports-goods. The bark is made into a paste for application on painful, dislocated joints. Extract of the stem bark is reported to possess fungicidal properties. The roots are used as a cure for leucorrhoea. (Annon., 1985, The Wealth of India: Raw Material, CSIR, New Delhi, 1,95).

*A. indica* has been investigated for chemical and biological studies by different groups. Starch (25%) from Indian horse chestnut on dry basis was reported (Uppal, I. S., 1952, Starch from Indian horse chestnuts and its chemical examination, J. Ind. Chem. Soc., 15, 178-80). Two flavonoids glycosides namely, rutin and astragalin from the chloroform extract of the stems, a flavonoids glycoside quercitrin, β-sitosterol and a triterpenoid saponin, aescin from the leaves (Ikram, M., Khan M. I., Kawano, N., 1978, Chemical investigation of *Aesculus indica,* Planta Medica, 34, 337-338; Ikram, M., Khan M. I., 1978, Chemical investigation of *Aesculus indica* Part-II, Fitoterapia, 49, 247-248). Aliphatic compounds namely *n*-hentriacontane, *n*-hentriacontanol and palmitone along with β-sitosterol from various extractives of leaves and a coumrin glycoside (aesculin) and quercetin L-rhamnoside (Mukherjee, K. S Bhattacharya, M. K.,Ghosh, P. K.,., 1983, Phytochemical investigation of *Aesculus indica* Linn. And *Fragaria indica* Andr., J. Indian Chem. Soc., 60, 507-508). Different triterpene glycosides **(3-5)** from Indian horse chestnuts were also reported by other workers (Singh, B., Agrawal, P. K., Thakur, R. S., 1986, Aesculuside-A, a new triterpene glycoside from *Aesculus indica,* Planta Medica, 52, 409-410; Sati, O. P., Rana, U., 1987, A new molluscicidal triterpenic glycoside from *Aesculus indica,* Int. J. Crude Drug Res., 25, 158-160; Singh, B., Agrawal, P. K., Thakur, R. S., 1986, Aesculuside-B, a new triterpene glycoside from *Aesculus indica,* J. Nat. Prod., 50, 781-783).

In a comparative study of phytochemicals in *Aesculus indica* and *A*. *hippocastanum* seeds, husk and leaves depicted the differences between the species. Aesculin and its aglycone, aesculetin were not detected in leaves and husk of two species. Seeds and leaves had similar components whereas they varied in husk. The content of aescin found to be 13.4% (w/w) in *A. indica* whereas *A. hippocastanum* contained 9.5%. Lauric, palmitic, myristic stearic, arachidic and oleic acid were detected by capillary GC. (Srijayanta S.; Raman A.; Goodwin B.L.) A comparative study of the constituents of *Aesculus hippocastanum* and *A. indica,* Jour. Med. Food, Vol. 2(2), 1999, 45-50). Earlier reports, indicated the presence of aescin in A. *hippocastanum* as more than 13% (Shibata, S., 1977, New natural products and plant drugs with pharmacological, biological and therapeutical activity (Wagner H., Wulff, P. ed.) p 177, Springer, Berlin), whereas it was reported to be 3-6% in A. *hippocastanum* (Hostettmann, K. Marston, 1995, A., Saponins, in Chemistry and Pharmacology of Natural Products, Cambridge University Press)

The seeds of *Aesculus* species also known as horse chestnuts are used as food, feed and fodder, for the production of alcohol. They possess therapeutic importance in human and veterinary medicines, e.g. in the treatment of fevers, for use in curing piles, obstinate constipation, of mammary induration and cancer. The meal of horse chestnuts is employed to cleanse oily skin). Due to their saponins content, the seeds possess toxic properties. Alcoholic extracts of seeds of *A. hippocastanum* shows hemolytic, antiedema and other pharmacological properties. Extracts have been also applied in cosmetics whereas the oil extracted from *A. indica* seeds exhibits a significant anti-inflammatory activity in carrageenin-induced edema in rats. Sometimes, addition of other plant extracts or chemical compounds enhances their activity or caused a change in biological effects (Hostettmann, K. Marston, 1995, A., Saponins, in Chemistry and Pharmacology of Natural Products, Cambridge University Press; Kirtikar, K.R., Basu, B.D., 1935, Glossary of Indian Medicinal Plants L.M. Basu, Allahabad, India Vol. I, p. 626; Singh, B. Agrawal, P. K., 1996, Chemistry and Biological Activity of Aescin, in Supplements to Cultivation and Utilization of Medicinal Plants, (Eds. S.S. Handa and M.K. Kaul PP 457-476 (RRL Jammu CSIR).

Aescin is known for its anti-inflammatory and anti-endemic activities and is used in tropical applications of ointment and oral preparations for the treatment of peripheral vascular diseases (Bruneton, J., 1995, Pharmacognosy, phytochemistry and medicinal plants, Paris, France, Lavoisier). Hypoglycemic and anti-inflammatory activities of different derivatives of aescin isolated from horse chestnut seeds has been demonstrated (Yoshikawa, M., Murakami, T., Yamahara, J., 1998, Bioactive saponins and glycosides. XII horse chestnut, (2), structure of escin IIIb, IV and VI and isoescins la, Ib and V, acylated polyhydroxy oleanane triterpene oligoglycosides, from the seeds of the horse chestnut tree *(Aesculus hippocastanum* L., Hippocastanaceae), Chemical and pharmaceutical bulletin 46, 1764-1769)

Horse chestnut extract is reported to have beneficial effects , on venous insufficiency and associated conditions. Aescin exhibited potent anti-inflammatory activity, also reduces capillary fragility and therefore, helped to prevent leakage of fluid which can cause swelling into surrounding tissues. Horse chestnut extract was also found to have powerful anti-oxidant activity than Vitamin -E. Among 65 plant extracts tested, horse chestnut extract was shown to have one of the highest 'active-oxygen' scavenging abilities. It exhibited a potent cell protective effect. These activities are linked with anti-ageing properties of anti-oxidants. The extract is also rich in a number of flavonoids, such as derivatives of quercetin and kaempferol. Flavonoids also have protective effect on blood vessels, and are well known, powerful antioxidants (Wilkinson, J.A., Brown, A. M. G., 1999, Horse chestnut-Aesculus *hippocastanum.* Potential application in cosmetic skin-care products, International Journal of Cosmetic Science, Vol. 21(6), 437-447.

Pharmaceutical preparations containing aescin have been prepared for treatment of various types of edema and venous circulatory system disorders. The dry seeds extract processed to form pellets with dextrin. The final products can be best provided as hard gelatin capsule or matrix tablets containing extract (Tobin, J., Heese, G. U., 1999, Production of pharmaceutical formulation containing aescin for treatment of edema & venous disorder EP, 900563A1). A cosmetic and paramedical composition containing aqueous-ethanol extracts of marigold, horse chestnut, licorice, aqueous extracts of silverweed, walnut tree leaves, lavender resinoid and Roman chamomile with ethanol-water carrier in fixed proportions. The above preparation serves as a base material for excellent cosmetic composition, curative cosmetic & curative products. (Hangay, G., Kelen, A., Ranky, S. K., Gulyas, A., Simonovits, E., Vinezenee, K. J., Szepesi, G., Kesera, P., Selmeczi, A., Putz, P., 1992, Cosmetic and paramedical composition containing plant extracts, US 5080901). The use of aescin complexes with β-sitosterol or cholesterol and phospholipids as a pharmaceutical composition such as anti-an inflammatory acid vasotonic agent is described (Bombardelli E., Patri G., Pozzi R., 1992, Complexes of aescin, β-sitosterol or cholesterol and phospholipids and pharmaceutical compositions containing them, US 5118671).

In a new invention, which relates to a medicament containing a standard dry extract of horse chestnut seeds active against various types of edema and diseases of venous circulatory system and a process for manufacturing of this medicament. In this process the powder is extracted with alcohol and water to obtain an alcohol tincture. The tincture is mixed with dextrin and spray-dried for further formation of pellets with poly vinyl pyrrolidone and talcum. This is further moistened with alcohol and palletizing is done with the help of a mixer/granulator apparatus or marumerizer, spheronizer or other pelletizing material. The above preparation containing the standard extract is useful for treatment of venous circulatory disorders venous insufficiency inflammations, edema including brain edema or swelling (Toblin, J., Heese, G. U., 2000, Production of pharmaceutical formulations for treatment of edema and venous disorders, US 6077534).

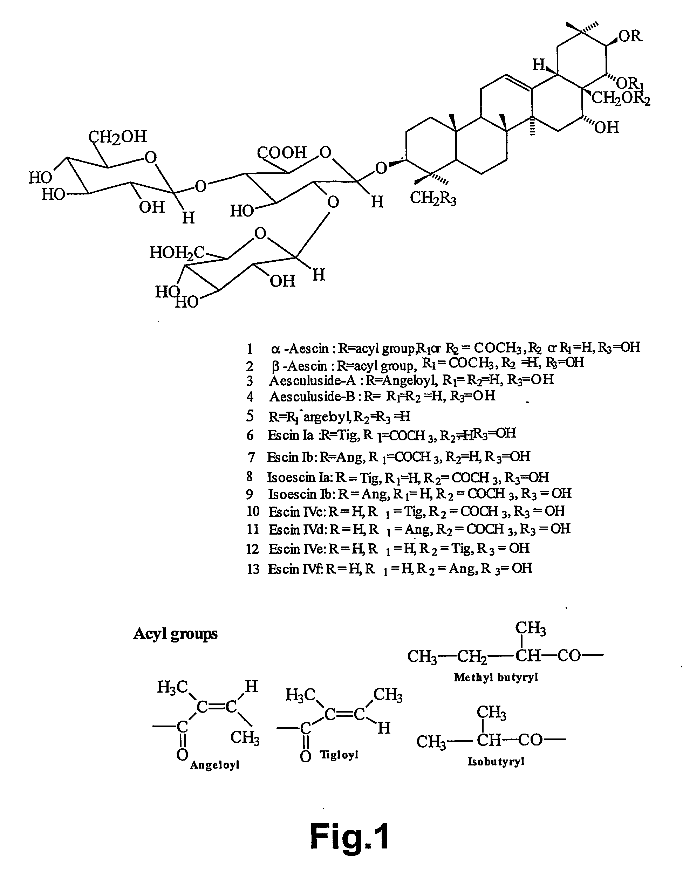

Aescin also known as escin, is a mixture of triterpene saponins and is the main bioactive constituent of horse chestnut seeds, twigs, sprouts and leaves (Mete, K. O., Kara, M., Kara, S., 1994, Quantitative determination of escin. A comparative study of HPLC and TLC-densitometry, Fitoterapia, 65, 439-443). Aescin exists in two forms as α-aescin and β-aescin. β-Aescin is made up of 30 components, which are derived from protoaescigenun and barringtogenol, occurring in the ratio of 8:2 (Bombardelli, E., Morazzoni, P., Griffini, A., 1996, *Aesculus hippocastanum* L., Fitoterapia, 67, 483-511). Seed oil contains 65-70% oleic acid. Other constituents include phenolic acids, coumarin derivative Aesculin, hydrocarbons such as squalene and nonacosane and cyclitols (Stankovic, S. K., Bastic, M. B., Jovanovic, J. A., 1987, Ontogenetic distribution of hydrocarbons in horse chestnut seed (*Aesculus hippocastanum* L.), Herba Polonica, 33, 3-8). Aesculin extracted from the bark of horse chestnut is used in preparations for the treatment of peripheral vascular diseases, hoemorrhoids and cosmetics designed to ameliorate ageing skin (Bombardelli, E., Morazzoni, P., Griffini, A., 1996, *Aesculus hippocastanum* L., Fitoterapia, 67, 483-511). Overall, seeds contain 3% water, 3% ash, 11% crude protein, 5% oil and 74% carbohydrates (Duke, J. A., 1985, CRC Handbook of medicinal herbs, Boca Raton, FL, CRC Press). Recently eight bioactive saponins including four new compounds have been reported from *Aesculus chinensis.* The major being escin la (6), escin Ib (7), isoescin la (8) and isoescin Ib (9) and the new compounds escin IVc (22α-tigloyl-28-acetyl protoaescigenin-3β-O-[β -D-glucopyranosyl (1-2)] [β -D-glucoppyranosyl (1-4)]-β-D-glucopyranosiduronic acid) (10), escin IVd (2α-Angeloyl-28-acetlyprotoaescigenin-3β-O-[β-D-glucopyranosyl (1-2)] [β -D-glucopyranosyl (1-4)]-β-D-gluco-pyranosiduronic acid) (11), escin IVe (28-tigloylproaescigenin-3β-O-[β-D-glucopyranosyl (1-2)] [β -D-glucopyranosyl (1-4)]-β -D-gluco-pyrahosiduronic acid) (12), escin IVf (28-angeloylprotoaescigenin-3β-O-[β-D-glucopyranosyl (1-2)] [β -D-glucopyranosyl (1-4)]-β -D-gluco-pyranosiduronic acid) (13). These compounds were reported to have inhibitory activity against HIV-1 protease. (Yang X-W.; Zhao J.; Cin Y-X.; Lin X-H.; Mac-M.; Hattori M.; Zhang L-H.; 1999, Anti-HIV-1 Protease Triterpenoid saponins from the seeds of *Aesculus chinensis,* Jour. Nat. Prod., 62(11) 1510-1513). Some of the major compounds present in aescin are listed in fig 1.

Cucumber mosaic virus (CMV) is world wide in distribution perhaps has a wider range of hosts and attacks a greater variety of vegetables, ornamentals, weeds and other plants than any other virus. Among the most important vegetables affected by CMV are cucumbers, beans, spinach, tomatoes, bananas, peppers, crucifers etc. Other important crops affected by CMV are gladioli, melons, squash, celery and beets. So, it causes substantial amount of damages to all crops. To reduce disease incidence in the field, production of disease free plants and chemical control of vectors are important aspects (Matthew, R.E.F., 1991, In Plant Virology, Academic Press, San Diego).

CMV is a member of cucumo virus group, first reported in *Cucumis sativus* from USA (Price, W. C., 1934, Phytopathology, 24, 695-700). It is distributed all over the world. Their infection on natural hosts leads to severe mosaic, stunting, and reduction of leaf lamina and reduced fruit yield. It can be transmitted mechanically and by aphid vectors.

*Chenopodium amaranticolor, C. quinoa, Cucumis sativus, Vigna unguiculata, Lycopersicon esculentum, N. glutinosa and N. tabacum* act as diagnostically susceptible hosts. CMV inoculation on *Chenopodium amaranticolor* and *C. quinoa* results in chlorotic and necrotic local lesion. However on *Cucumis sativus* it leads to systemic mosaic. *Cucumis sativus, Nicotiana clevelandii, N. glutinosa* and *N. tabacum* act as maintenance and propagation hosts for CMV (In Viruses of plants, Description and lists from VIDE database, ed., Brunt, A. A., Carbfree, K., Daltwitz, M. J., Gibbs, A. J., Watson, L., CAB international, pp 477-486)

There are a number of plant extracts and pure isolates of plant extracts and pure isolates which contain substances that interfere with or inhibit infection of viruses. Synthetic compounds like Ribavirin (Lozoya-Saldana, H., Dawson, W. O., Marashige, T., 1984, Effect of ribavirin and adenine arabinoside on tobacco mosaic virus in *Nicotiana tabacum L.* var. xanthim tissue cultures, Plant Cell Tissue Org. Cult., 3, 41-48), Tiazaturin (Cancer, J. Amelia, V., Vicente, M., 1984, Effect of tiazofurin on tomato plants infected with tomato spotted wilt virus, Antiviral Res., 4, 325-331) and Pyrazofurin are used for the inhibition of virus replication. These compounds are effective against at least 16 plant viruses (Hansen, A. J., 1989, Antiviral chemicals for plant disease control, Critical Review in Plant Sciences, 8 (1), 45-88).

Approximately 1000 ppm Ribavirin is needed to inhibit local lesion development and to prevent infection with susceptible viruses such as PVX and CLSV. PNRSV seems to be resistant to Ribavirin (Hansen, A. J., 1984, Effect of ribavinin on green ring mottle saucan agent and necrotic rings spot virus in *Prunus* species, Plant Dis. Rep., 68, 216-218). Carnation Mottle Virus can be completely eliminated from meristem tip after five weeks of treatment of Ribavirin @ 5 mg / liter (Wang, B., Zu, M.K., Yu, S. Q., Zhang, R. P., 1990, Elimination of carnation mottle virus from carnation plants, Chinese J. of virol., 6, 341-346). Ribavirin @ 20- 100 mg per liter was highly effective in elimination of CMV or LSV on *lilies* in in-vitro cultures (Kim, J. V., Lee, S. V., Kim, H. R., Choi, J. K., 1994, Effect of virazole on elimination of viruses (LSV and CMV) from infected lily plants, J. Agri. Sci. Crop Protection, 36, 370-374). Combination of thermotherapy (35°C for 4 weeks) with Ribavirin (50 5m) was observed to be more effective in decreasing number of virus infected bulblets (Pin San, X. U., Niimi,Y., Xo, P. S., 1999, Evaluation of virus-free bulblet production by antiviral and/or heat treatment in *in-vitro* scale cultures of *Lilium longiflorum* 'Georgia' and L. X 'Casablanca', J. Japanese Society for Horticultural Science, 68, 640-647). This compound is also effective against viriods. Treatments of infected plants with ribavirin at 300-1400 mg/litre reduced virioid levels and led to almost complete remission of symptoms on newly developed leaves. When applied to plants soon after inoculation, ribavirin prevented establishment of the viroid (Belles-JM; Hansen-AJ; Granell-A; Conejero V., 1986, Antiviroid effects of ribavirin on citrus exocortis viroid infection in *Gynura aurantiaca* DC, Physiological-and-Molecular-Plant-Pathology, 61-65)

1-Morpholino methyl- tetrahydro-2- (1H)- pyrimidinone (DD13) also exhibits protective effect in 97-100% plants infected with CMV and ToMV as evaluated using sensitive tests like ELISA and immuno-fluorescence (Yordanova, A., Karparov, A., Stoimenova, E., Starcheva, M., 1996, Antiphytoviral activity of 1-morpholinomethyl-tetrahydro2 (1H)-pyrimidinone (DD13), Plant Pathology, 45, 547-551).

Drugs like Bavistin 50WP Methyl-2-benzimidazol carbamate (.05 and 0.1%), resorcinol (0.5 and 0.1) and thuja (30X potancy) reveals high effectivity against CMV on sweet pepper (Cheema, S. S., Chahal, A. S., Bansal, R. D., Kapur, S. P., 1991, Efficacy of bioproducts and chemicals against cucumber mosaic virus on sweet pepper under screen house conditions various, Indian J. Virology, 7, 169-175). Other synthetic antivirals are purine base analogue 8' azaguanine (Hecht, H., Diercks, R., 1978, Effect of antiviral agents on potato virus Y in intact potato plants II. Antimetabolites and other antiviral substances, Bayerisches-Landwirtschaftliches-Jahrbuch, 55 (4), 433-457), adenine arabinoside (Lozoya-Saldana, H., Dowson, W. O., Rev Mex., 1986, Effect de ribavirin adenina arabinosida sorbre el virus mosaico del tabac el virus moteado clorotico del chicaro de vace *in-vivo,* Fitopatrol, 3, 38-42), Uracil (Dubey, L. N., Joshi, R. D., 1976, Some studies on the inhibition of cucumber mosaic virus in chilli (*Capsicum annuum* L.). 1. Effect of pyrimidine analogues and 2,4-D, Indian-Journal-of-Microbiology, 16(1), 34-36), 5-Azauracil (Cassells, A. C., Long, R. D., 1982, The elimination of potato viruses X, Y, S and M in meristem and explant cultures of potato in the presence of virazole, Potato Res., 25, 165-173) and other large number of cyclic compounds and non-cyclic azyne compounds (Schuster, G., Heinisch, L., Schulze, W., Ulbright, H., Willitzer H., 1984, Antiphytovirole verbindungen mit nich and zyklischer Azin - struktur, Phytopathol, 111, 97-113).

The essential oil of *Melaleuca alternifolia* (Maidan & Betche) cheel (Tea tree) also has antiviral activity against TMV (Bishop C.D., 1995, Antiviral activity essential oil of *Melaleuca alternifolia* (Maidan & Betche) cheel (Tea tree) against tobacco mosaic virus, J. of essential oil Research, 7(6), 641-644). Essential oils of *Ageratum conyzoides, Callistemon lanceolatus (G. Citrinus), Carum capitum (Trachyspermum ammi), Ocimum sanctum and Peperomiea pellucida* were evaluated for inhibitory activity against cowpea mosaic virus (CPMV), mung bean mosaic virus (MBMV), bean common mosaic virus (BCMV) and southern bean mosaic virus (SBMV). *Ocimum sanctum* at 3000 ppm gave the best inhibition of 89.6, 90, 92.7, 88.2 % against CPMV, MBMV, BCMV and SBMV respectively (Rao, G. P., Pandey, A. K., Shukla, K., 1986, Essential oils of some higher plants vis- a -vis some legume viruses, Indian perfumer, 30(4), 483-486).

Out of 18 essential oils, the essential oil of *Acorus calamus, Angelica glauca, Artemisia vulgaris, Cedrus deodara, Cinamomum tamala, C. camphora, Cymobopogon winterianus, Hedychium spicatum, Juniperus macropoda, Pycnanthemum flexuosum, Saussurea lappa,* and *Veleriana wallichii* were found to have antiviral activity against Carnation ring spot virus and Carnation Vein Mottle virus (Singh, B., Joshi, V. P., Raja Ram, Sharma, A. and Zaidi, A. A., 2000, Antiviral activity of some naturally occurring essential oils against carnation viruses, Indian Perfumer, 449, 271-274).

Saponins, glycosidic plant constituents are known for their wide- spread occurrence in plants and their detergent and pesticidal like activities. Several biological activities are associated with saponins like antimicrobial activity, antitumour activity, molluscicidal activity etc.

Several saponins like gymnemic acids from *Gymnema sylvestre* (Asclepiadaceae) are inhibitory, as are aescin, cyclamin A, primula saponins and theasaponin (Rao, G. S., Sinsheimer, J. E., Cochran, K. W., 1974, Antiviral activity of triterpenoid saponins containing acylated β-amyrin aglycone, J. Pharm. Sci., 63, 471-473). These are reported to be involved in early viral infection events, involving inhibition of virus- host cell attachment. They are also active *in-vivo.* Aescin inhibited the infectivity of influenza virus infectivity *in-vitro.* At its estimated maximum tolerated concentration (12.5µg/ml), it inhibited influenza A₂ (Japan 305) by 92%. By comparison, the anti-influenza agent amantadine inhibited the same strain of influenza by 98% at a concentration of 25 mg/ml, 1/4 of its estimated maximum tolerated concentration.

Glycyrrhizin, an another saponin found to have antiviral activity and inhibits *in vitro* growth and cytopathogenicity of several DNA and RNA viruses including herpes simplex virus type 1 (HSV-1), Newcastle disease virus, vesicular stomatitis virus, polio virus type-1 (Pompei, R., Flore, O., Marccialis, M. A., Pani, A., Loddo, B., 1979, Glycyrrhizin acid inhibits virus growth and inactivates virus particles, Nature, 281, 689-690) and Varicella-Zoster virus (VZV) (Baba, M., Shigeta, S., 1987, Antiviral activity of glycyrrhizin against varicella-zoster virus *in-vitro,* Antiviral Res., 7,99-107).

Saikosaponin-d, from the roots of *Bupleurum falcatum* (Umbelliferae) causes inactivation of measles and herpes viruses at concentration greater than 5µM *in-vitro.*

Quinovic acid glycosides from *Uncaria tomentosa* (Rubiaceae) and *Guettarda platypoda* (Rubiaceae) has been found to have *in-vitro* inhibitory effect against vesicular stomatitis virus (a minus-strand RNA virus) (Aquino, R., De Simone, F., Pizza, C., Conti, C., Stein, M. L., 1989, Plant metabolites. Structure and *in-vitro* antiviral activity of quinovic acid glycosides from *Uncaria tomentosa* and *Guettarda platypoda,* J. Nat. Prod., 52, 679-695).

Asterosaponins from *Asterias torbesi, Acanthaster planci* and *Asterina pectinifera* are reported to inhibit influenza virus multiplication (Shimizu, Y., 1971, Antiviral substances in starfish, Experientia, 27, 1188-1189). While crossasterosides B and D from Crossaster papposus inhibit plaque formation of pseudorabies virus (Suid herpes virus 1, SHV-1) by 43% and 27% respectively at a dose of 1 µg/ml (Anderson, L., Bohlin, L., lorizzi, M., Riccio, R., Minale, L., Moreno-Loez, W., 1989, Biological activity of saponins and saponins like compounds from starfish and brittle stars, Toxicon, 27, 179 -188).

**Antiviral activity of Triterpenoids**

| Triterpenoid | Virucidal | HSV | Polio | Other viruses | Time of effect | Active *in vivo* |
|---|---|---|---|---|---|---|
| Gymnemic acid A | | -- | ---- | ++influenza +rhinovirus | Immediately before or after virus addition | +Influenza in mice |
| | | | | | | |
| Glycyrrhetinic acid | +HSV only | ++ | --- | +VSV +NDV +Vaccinia | Immediately after virus addition | |
| Glycyrrhizin | +slight effect | ++ | --- | ++VZV +SFV +HIV-1 measles Coxackic | | +Hepatitis in humans +healing of Herpes Zoster |
| Hydroxy-protoprimulagenin | +HSV only | ++ | + | VSV Vaccinia adenovirus | Immediately before or immediately after virus addition | HSV Keratitis in rabbits |
| Carbenoxolone/ cicloxolone | +HSV | ++ | | | Best immediately after virus addition | HSVlesions in humans |

As such aescin finds widespread use in the prevention and treatment of peripheral vascular disorders (Rothkopf, V. H., Vogel, G., 1976, Neue Befunde Zur Wirksamkeit und zum Wirkungs mechanismus des Rosskastanien-saponins Aescin, Arzneimittel forsch., 26, 225-235) and in the treatment of venous stasis, ulcus curis, dysmenorrhoea and haemorrhoids. But there is no report regarding the antiviral activity of aescin against viruses infecting plants as well as against cucumber mosaic virus.

So we tried to evaluate the antiviral activity of this compound against cucumber mosaic virus, which infects various crops.

### Objects of the invention

The main object of the present investigation is to evaluate the antiviral activity of Aescin from Indian horse chestnut *(Aesculus indica* seeds).

Another object of the present invention is to compare antiviral activity of aescin with Amantadine, 2-thiouracil, Zidovudine and Acyclovir, other commercially available antiviral products on the market.

Still another object of the present investigation is to provide control measures for cucumber mosaic virus.

Yet another object of the present investigation is to provide a more efficient antiviral natural product than Amantadine, 2-thiouracil, Zidovudine and Acyclovir, commercially available antiviral agents.

Yet another object of the present investigation is to provide a new use of aescin, a component of pharmaceutical importance and meaningful utilization of Indian horse chestnut *(Aesculus indica* seeds) growing wild in the high hills of Himalaya which otherwise go unutilized every year in hundreds of tonnes.

### Summary of the Invention

In accordance, the present invention provides an effective anti-viral composition comprising β-aescin, obtained from the Indian horse chestnut *(Aesculus indica* seeds) growing wild in the high hills of Himalayas. The said composition is more effective than any other known antiviral agent used to control the growth of cucumber mosaic virus (CMV) affecting plants like vegetable plants, fruit plants, seeds, leaves, ornamental plants and other plants.

### Detailed Description of the Invention

Accordingly, the present invention provides an antiviral composition comprising an effective amount of β-Aescin obtained from the Indian Horse Chestnut (*Aesculus indica)* against Cucumber mosaic virus (CMV) which attacks a greater variety of vegetables, ornamentals, weeds and other plants than any other virus.

One more embodiment of the invention relates to the growth inhibition activity of the composition against cucumber mosaic virus, which is up to 94%.

In another embodiment of the invention, wherein the said composition is more effective than other known antiviral agents namely viz. Amatadine, 2-Thiouracil, Zidovudine and Acyclovir

Still another embodiment of the invention provides a composition containing β-Aescin, which is up to 50% more effective than Amatadine.

Still another embodiment of the invention provides a composition containing β-Aescin, which is up to 100% more effective than 2-Thiouracil.

Still another embodiment of the invention relates to a composition of β-Aescin more effective than Zidovudine by about 40%.

Yet another embodiment, the said antiviral composition containing β-Aescin is more effective than Acyclovir by about 60%.

Yet another embodiment of the invention, the effective dosage of β-Aescin is in the range of 1000-2000 PPM.

One more embodiment of the invention, the said composition can also be used with additives, diluents or carriers.

Still another embodiment of the invention, the said composition protects the most important vegetables selected from the group consisting of cucumbers, beans, spinach, tomatoes, bananas, peppers and crucifers from attack by CMV.

Still another embodiment, the said composition protects other important crops such as gladioli, melons, squash, celery and beets from CMV attack.

One more embodiment of the present invention relates to isolation of β-Aescin, a New Antiviral Agent from Indian Horse Chestnut *(Aesculus indica)* which comprises (a) collection, drying and grinding of seeds (b) extraction of powdered seeds to yield aescin as white amorphous powder with required specification. The powder obtained from step (b) was evaluated by preparing a pure culture of Cucumber mosaic virus and application of pure isolates in ppm concentration on leaves of *Chenopodium amaranticolor* to find out the efficacy of β-aescin.

The process of extraction and purification of β-aescin from powdered Indian horse chestnut *(Aesculus indica)* is being disclosed separately in another co-pending application.

In an embodiment of the present invention, β-Aescin was obtained from Indian horse chestnut *(Aesculus indica* seeds) by a process of extraction and purification to yield a white amorphous powder of required specifications.

In another embodiment of the present invention, β-aescin was tested against cucumber mosaic virus.

In yet another embodiment of the present invention, β-aescin and Amantadine, 2-thiouracil, Zidovudine and Acyclovir, other commercially available antiviral agents were compared for inhibition of cucumber mosaic virus.

### Brief description of the accompanying drawing

**Fig.1** shows some of the major triterpene glycosides present in aescin.

### Example1

### Virus Culture

The Culture of cucumis mosaic virus was maintained both in natural host and on *Cucumis sativus* as maintenance and propagating host. For inoculation of virus, leaves of 15 days old inoculated host plant were ground in phosphate buffer pH-7.2 and used for the screening of antiviral activity.

### Example2

### Screening of Antiviral Activity of β-aescine

Activity of β-aescin was tested against cucumber mosaic virus in different dilution. Tests were performed by using 1000 ppm and 2000 ppm of the above plant extract. The phytotoxic effect appeared on *Chenopodium amaranticolor* leaves, the bioassay plant for virus. The aescin was mixed with crude sap containing the virus and incubated at room temperature for 24 hours. After incubation sap containing the virus was inoculated individually on the bioassay hosts along with an abrasive to monitor the inhibitory effect.

### Example 3

### Comparison of Antiviral Activity of β-aescin to Amantadine

The β-aescin and amantadine at 1000ppm were mixed with crude sap containing the virus separately and incubated at room temperature for 24 hours. After incubation sap containing the virus was inoculated individually on *Chenopodium amaranticolor* leaves, on bioassay host along with an abrasive to monitor the inhibitory effect.

### Example 4

### Comparison of Antiviral Activity of β-aescin to 2-Thiouracil

The β-aescin and 2-Thiouracil at 1000ppm were mixed with crude sap containing the virus separately and incubated at room temperature for 24 hours. After incubation sap containing the virus was inoculated individually on *Chenopodium amaranticolor* leaves, on bioassay host along with an abrasive to monitor the inhibitory effect.

### Example 5

### Comparison of Antiviral Activity of β-Aescin to Zidovudine

The β-aescin and Zidovudine at 1000ppm were mixed with crude sap containing the virus separately and incubated at room temperature for 24 hours. After incubation sap containing the virus was inoculated individually on *Chenopodium amaranticolor* leaves, on bioassay host along with an abrasive to monitor the inhibitory effect.

### Example 6

### Comparison of Antiviral Activity of β-Aescin to Acyclovir

The β-aescin and Acyclovir at 1000ppm were mixed with crude sap containing virus separately and incubated at room temperature for 24 hours. After incubation sap containing the virus was inoculated individually on *Chenopodium amaranticolor* leaves, on bioassay host along with an abrasive to monitor the inhibitory effect.

| **Treatment of CMV with 1000-ppm β-aescin** | | | | | |
|---|---|---|---|---|---|
| S NO | No of lesions on | | Average No of lesions | | % |
| | Test | Control | Test | Control | Inhibition |
| 1 | 14 | 142 | 1.4 | 14.2 | 90.14 |
| 2 | 23 | 236 | 2.3 | 23.6 | 90.25 |
| 3 | 18 | 189 | 1.8 | 18.9 | 90.47 |

| **Treatment of CMV with 2000-ppm β-aescin** | | | | | |
|---|---|---|---|---|---|
| | No of lesions on | | Average No of lesions | | % |
| S NO | Test | Control | Test | Control | Inhibition |
| 1 | 7 | 114 | 0.7 | 11.4 | 93.85 |
| 2 | 14 | 228 | 1.4 | 22.8 | 93.85 |
| 3 | 10 | 171 | 1.0 | 17.1 | 94.15 |

| **Treatment of CMV with 1000-ppm β-aescin and 1000-ppm Amantadine as control** | | | | | |
|---|---|---|---|---|---|
| S NO | No of lesions on | | Average No of lesions | | % Inhibition |
| | Test | Control | Test | Control | |
| 1 | 23 | 45 | 2.3 | 4.5 | 48.8 |
| 2 | 20 | 40 | 2.0 | 4.0 | 50 |
| 3 | 24 | 48 | 2.4 | 4.8 | 50 |

| **Treatment of CMV with 1000-ppm β-aescin and 1000-ppm 2-Thiouracil as control** | | | | | |
|---|---|---|---|---|---|
| S NO | No of lesions on | | Average No of lesions | | % |
| | Test | Control | Test | Control | Inhibition |
| 1 | 0 | 19 | 0 | 1.9 | 100 |
| 2 | 0 | 17 | 0 | 1.7 | 100 |
| 3 | 0 | 11 | 0 | 1.1 | 100 |

| **Treatment of CMV with 1000-ppm β-aescin and 1000-ppm Zidovudine as control** | | | | | |
|---|---|---|---|---|---|
| S NO | No of lesions on | | Average No of lesions | | % |
| | Test | Control | Test | Control | Inhibition |
| 1 | 11 | 18 | 1.1 | 1.8 | 38.8 |
| 2 | 27 | 45 | 2.7 | 4.5 | 40 |
| 3 | 19 | 31 | 1.9 | 3.1 | 38.7 |

| **Treatment of CMV with 1000-ppm β-aescin and 1000-ppm acyclovir as control** | | | | | |
|---|---|---|---|---|---|
| S NO | No of lesions on | | Average No of lesions | | % |
| | Test | Control | Test | Control | Inhibition |
| 1 | 17 | 40 | 1.7 | 4.0 | 57.5 |
| 2 | 4 | 10 | 0.4 | 1.0 | 60 |
| 3 | 10 | 25 | 1.0 | 2.5 | 60 |

**The main advantages of the present invention are:**
1. *Aesculus indica* plant grows wild in temperate and sub-temperate regions of the Himalayan belt from Jammu & Kashmir, Himachal Pradesh, Uttranchal and Northeastern states is hence easily available in bulk quality.
2. Seeds are used for the production of aescin which are a renewable source from the plant and hence no threat to biodiversity.
3. β-Aescin is a natural product and hence no threat to the environment.
4. Application of β-aescin ensures quick and efficient recovery from viral infections.
5. It also helps in plant virus management.
6. β-Aescin is a more potent antiviral agent than commercially available antivirals.
7. A cheap, eco-friendly and easily available antiviral natural compound.
8. β-Aescin is produced form *A. indica* and *Aesculus* species. As the plant grows wild and it is produced from seeds, which are a renewable source and hundreds of tonns of material, goes unutilized every year. In the laboratory powdered seeds are processed by a simplified process. The antiviral drugs available on the market are prepared from synthetic reactions involving numbers of steps and hence are costly and generally out of approach to common people or farmers. Hence aescin will help as a material easily available and a potent antiviral agent.

## Claims

1. An antiviral composition comprising an effective amount of β-Aescin obtained from the Indian Horse Chestnut *(Aesculus indica)* against Cucumber mosaic virus which attacks a great variety of vegetables, ornamentals, weeds and other plants.

2. The composition as claimed in claim 1, wherein the said composition inhibits the growth of cucumber mosaic virus up to 94%.

3. The composition as claimed in claim 1, wherein the said composition is more effective than other known antiviral agents namely viz. Amatadine, 2-Thiouracil, Zidovudine and Acyclovir

4. The composition as claimed in claim 1 is up to 50% more effective than Amatadine.

5. The composition as claimed in claim 1 is up to 100% more effective than 2-Thiouracil.

6. The composition as claimed in claim 1 is up to 40% more effective than Zidovudine.

7. The composition as claimed in claim 1 is up to 60% more effective than Acyclovir.

8. The composition as claimed in claim 1, wherein the effective dosage of β-Aescin is in the range of 1000-2000 PPM.

9. The composition as claimed in claim 1 can also be used with additives, diluents or carriers.

## Patentansprüche

1. Antivirale Zusammensetzung, welche β-Aescin, das aus der indischen Rosskastanie *(Aesculus indica)* gewonnen wurde, in einer Menge umfasst, die gegen das Gurkenmosaikvirus, welches eine große Vielfalt an Gemüse- und Zierpflanzen, Kräutern und anderen Pflanzen befällt, wirksam ist.

2. Zusammensetzung wie die in Anspruch 1 beanspruchte, wobei die Zusammensetzung das Wachstum des Gurkenmosaikvirus um bis zu 94 % hemmt.

3. Zusammensetzung wie die in Anspruch 1 beanspruchte, wobei die Zusammensetzung wirksamer als andere bekannte antivirale Mittel ist, wobei insbesondere Amantadin, 2-Thiouracil, Zidovudin und Acyclovir zu nennen sind.

4. Zusammensetzung wie die in Anspruch 1 beanspruchte, welche bis zu 50 % wirksamer als Amantadin ist.

5. Zusammensetzung wie die in Anspruch 1 beanspruchte, welche bis zu 100 % wirksamer als 2-Thiouracil ist.

6. Zusammensetzung wie die in Anspruch 1 beanspruchte, welche bis zu 40 % wirksamer als Zidovudin ist.

7. Zusammensetzung wie die in Anspruch 1 beanspruchte, welche bis zu 60 % wirksamer als Acyclovir ist.

8. Zusammensetzung wie die in Anspruch 1 beanspruchte, wobei die wirksame Dosierung des β-Aescins im Bereich von 1000 bis 2000 ppm liegt.

9. Zusammensetzung wie die in Anspruch 1 beanspruchte, bei deren Anwendung darüber hinaus Zusatzstoffe, Verdünnungsmittel oder Trägerstoffe zum Einsatz kommen können.

## Revendications

1. Composition antivirale comprenant une quantité efficace de β-aescine obtenue à partir du marronnier de l'Himalaya *(Aesculus indica)* contre le virus de la mosaïque du concombre qui attaque une grande quantité de légumes, de plantes d'ornement, de mauvaises herbes et autres plantes.

2. Composition telle que revendiquée à la revendication 1, dans laquelle ladite composition inhibe la croissance du virus de la mosaïque du concombre jusqu'à 94 %.

3. Composition telle que revendiquée à la revendication 1, dans laquelle ladite composition est plus efficace que d'autres agents antiviraux connus, c.-à-d. à savoir Amantadin, 2-thiouracil, zidovudine et acyclovir.

4. Composition telle que revendiquée à la revendication 1, qui est jusqu'à 50 % plus efficace que Amantadin.

5. Composition telle que revendiquée à la revendication 1, qui est jusqu'à 100 % plus efficace que 2-thiouracil.

6. Composition telle que revendiquée à la revendication 1, qui est jusqu'à 40 % plus efficace que zidovudine.

7. Composition telle que revendiquée à la revendication 1, qui est jusqu'à 60 % plus efficace que acyclovir.

8. Composition telle que revendiquée à la revendication 1, dans laquelle la posologie efficace de β-aescine est dans la gamme de 1000 - 2000 PPM.

9. Composition telle que revendiquée à la revendication 1, qui peut également être utilisée avec des additifs, des diluants ou des supports.
